Europäisches Patentamt

European Patent Office

Office européen des brevets

(19)

(11) Numéro de publication: **0 236 567 B1**

(12) **FASCICULE DE BREVET EUROPEEN**

(45) Date de publication du fascicule du brevet:
28.02.90

(51) Int. Cl.⁴: **F16L 23/00**, F16J 15/04

(21) Numéro de dépôt: **86117105.6**

(22) Date de dépôt: **09.12.86**

(54) **Système d'étanchéité entre deux brides métalliques.**

(30) Priorité: **12.12.85 LU 86209**

(43) Date de publication de la demande:
**16.09.87 Bulletin 87/38**

(45) Mention de la délivrance du brevet:
**28.02.90 Bulletin 90/9**

(84) Etats contractants désignés:
**AT BE CH DE ES FR GB GR IT LI NL SE**

(56) Documents cités:
**DE-C- 883 825**
**GB-A- 363 835**
**GB-A- 1 205 926**

**VDI ZEITSCHRIFT,**
**vol. 113, no. 11, août 1971, pages 869-870, Düsseldorf;**
**"Neuartige Rohrverbindungen für hohe Drücke und hohe Temperaturen"**

(73) Titulaire: **COMMUNAUTE EUROPEENNE DE L'ENERGIE ATOMIQUE (EURATOM), Bâtiment Jean Monnet Plateau du Kirchberg Boîte Postale 1907, L-1019 Luxembourg(LU)**

(72) Inventeur: **Van Loon, Leo, Via Lombardia 76, I-21029 Corgeno(IT)**
Inventeur: **Pilliard, Rémy, Via Cascine 11, I-21029 Cuirone(IT)**

(74) Mandataire: **Weinmiller, Jürgen, Lennéstrasse 9 Postfach 24, D-8133 Feldafing(DE)**

## Description

L'invention se réfère à un système d'étanchéité entre deux brides métalliques de tuyaux soumises à des températures extrêmes, ce système comprenant au moins une lèvre annulaire élastique, qui est portée par l'une des brides et forme par son sommet en contact avec l'autre bride une ligne d'étanchéité lorsque les brides sont assemblées.

Pour la connexion étanche de deux tuyaux, on interpose généralement un joint élastique annulaire entre les deux brides. Ce joint a une section en O ou en X, il est creux ou non, préssurisé ou déformé, et son matériau est choisi pour être compatible avec la température et la nature chimique des produits transportés dans les tuyaux. Dans des conditions extrêmes de température (température élevée ou très basse) et pour des ambiances agressives, les joints sont généralement en métal. Ils sont logés dans une rainure ménagée dans l'une de ces brides.

Un bon contact mutuel d'une part entre la première bride et le joint et d'autre part entre le joint et la deuxième bride est décisif pour une bonne étanchéité. Il faut donc polir toutes les surfaces de contact. Or, l'une des surfaces en cause, à savoir le fond de la rainure, est souvent obtenue par tournage et difficilement accessible pour un bon polissage. Il en résulte que des systèmes d'étanchéité de ce type sont chers et qu'une fuite éventuelle peut être causée par un défaut de l'une des surfaces mentionnées ci-dessus. En outre, lorsqu'on veut accoupler deux brides à distance, il faut veiller à ne pas perdre le joint.

Par le document GB-A 1 205 926, on connaît un système d'étanchéité selon le préambule de la revendication 1.

Par rapport à la réalisation selon ce document, l'invention a donc pour but de concevoir un système d'étanchéité pour des brides métalliques qui se prête mieux à une connexion et une déconnexion à distance, dans lequel une ligne d'étanchéité s'établit lorsque les brides sont assemblées afin de réduire le nombre de surfaces à polir.

Selon l'invention, ce but est atteint par le système d'étanchéité tel que spécifié dans la revendication 1.

De préférence, le fond d'au moins une des rainures a une section semi-circulaire, pour mieux répartir les contraintes lors de la déformation élastique de la lèvre.

Dans une réalisation préférée de l'invention, et connu en soi par ledit document, on prévoit deux telles lèvres, chacune formée entre deux rainures ménagées dans la bride respective. Ainsi, l'élasticité du système est mieux répartie sur les brides.

Bien qu'il soit possible de concevoir un système symétrique dans lequel l'emplacement et la profondeur des rainures soient les mêmes dans les deux brides, il est préférable de rendre la distance entre l'axe des brides et la rainure, ménagée dans la surface de la bride dont la zone de contact est bombée, inférieure à la même distance dans l'autre bride, et, en contre-partie, de rendre la distance entre le plan d'étanchéité et la rainure ménagée dans la surface cylindrique de la bride, dont la lèvre est bombée, supérieure à la même distance dans l'autre bride.

L'invention sera décrite ci-après plus en détail à l'aide d'un exemple préféré de réalisation et des dessins, qui montrent en coupe et partiellement deux brides munies d'un système d'étanchéité selon l'invention.

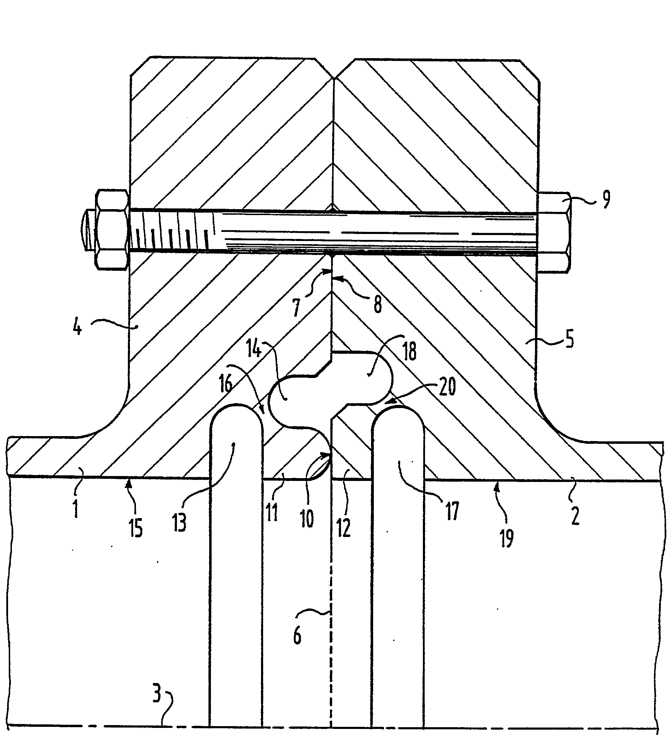

Sur la figure unique, on voit les extrémités de deux tuyaux 1 et 2, qui sont alignés selon un axe commun 3 et qui sont chacun munis d'une bride 4 et 5, le plan où se trouve réalisée l'étanchéité 6 pouvant constituer également le plan de contact entre des surfaces planes 7 et 8 des deux brides. Plusieurs boulons vissés 9 répartis régulièrement autour de l'axe 3 maintiennent les deux brides en contact lorsque le système est assemblé.

Lorsque la section des brides est circulaire, la ligne d'étanchéité est un cercle situé dans le plan 6 et représenté sur la figure par un point 10. Cette ligne est définie par le contact entre deux lèvres 11 et 12, qui font chacune partie intégrale de l'une des brides 4 et 5 respectivement et qui font office de joint.

La première de ces lèvres 11 est obtenue par tournage de deux rainures annulaires 13 et 14 ménagées dans la bride 4, l'une des rainures 13 pénétrant radialement dans la surface cylindrique 15 de cette bride et l'autre, 14, pénétrant perpendiculairement par rapport à la précédente dans la surface 7 du plan de la bride, de sorte qu'une zone 16 d'épaisseur réduite entre les deux rainures assure l'élasticité de la lèvre 11.

De même, l'autre lèvre 12 est obtenue par tournage de deux rainures annulaires 17 et 18 dans la bride 5, l'une de ces rainures, 17, pénétrant radialement dans la surface cylindrique 19 de la bride 5, et l'autre, 18, pénétrant perpendiculairement par rapport à la précédente dans la surface 8 de cette bride, de sorte qu'une zone 20 d'épaisseur réduite assure l'élasticité de cette lèvre 12. Le fond des quatre rainures 13, 14, 17, 18 a une section semi-circulaire, de sorte qu'il n'y ait pas de concentration de contraintes dans la zone 16 ou 20. D'ailleurs, la qualité de l'étanchéité ne dépend pas de la précision des surfaces de fond des rainures comme dans le cas de l'art antérieur.

L'épaisseur de la zone 16 et 20 dépend, bien entendu, de l'élasticité souhaitée pour ce système et de la déformation de cette zone lors de l'assemblage. A ce sujet, il est à noter que cette déformation est définie au préalable par la distance entre le plan d'étanchéité 6 et la surface 7 ou 8 respectivement de l'une des brides avant assemblage.

Comme il ressort de la figure, la lèvre 11 de la bride 4 a une section bombée autour du point de contact avec l'autre lèvre, alors que cette autre lèvre est plane dans cette zone. Ces deux zones sont les seules surfaces à polir et responsables de la qualité de l'étanchéité ultérieure.

La figure fait également ressortir que l'emplacement des rainures n'est pas le même dans les deux brides, bien qu'une configuration symétrique soit possible également. De préférence, la distance entre la rainure 13 et le plan 6 est supérieure à la distance entre ce plan et la rainure 17. De même, la distance entre la surface cylindrique 15 et la rainure 14 est inférieure à la distance entre la surface cylindrique 19 et la rainure 18. Ainsi, la géométrie de la zone 16 n'est pas la même que la géométrie de la zone 20, ce qui répartit mieux les contraintes de déformation élastique.

L'invention n'est pas limitée à l'exemple de réalisation selon la figure.

On peut, sans sortir du cadre de l'invention, réaliser l'invention sous forme symétrique par rapport au plan 6.

Enfin, le système peut être réalisé à l'aide d'une seule lèvre telle que la lèvre 11, ménagée dans la bride 4, alors que la bride 5 ne présente qu'une surface plane en regard de cette lèvre.

La cavité formée par la rainure 14 ou les deux rainures 14 et 18 peut être reliée à un détecteur de fuite permettant de détecteur une fuite bien avant que celle-ci se fasse sentir extérieurement.

Le système selon l'invention ne nécessite aucune pièce détachée telle qu'un joint séparé d'étanchéité, et se prête de ce fait particulièrement bien à une manipulation à distance. L'absence d'un joint séparé élimine en outre le problème de la compatibilité thermique ou chimique de ce joint. Enfin, la qualité de l'étanchéité ne dépend que de deux zones, qui sont facilement accessibles et peuvent de ce fait être usinées sans difficulté.

## Revendications

1. Système d'étanchéité entre deux brides métalliques (4, 5) de tuyaux (1, 2) soumises à des températures extrêmes, ce système comprenant au moins une lèvre annulaire élastique (11, 12), qui est portée par l'une des brides, cette lèvre (11, 12) faisant partie intégrale de l'une des brides (4, 5) et étant obtenue par tournage de deux rainures (13, 14; 17, 18), l'une (13, 17) pénétrant radialement dans la surface cylindrique (15, 19) de la bride et l'autre (14, 18) pénétrant perpendiculairement par rapport à la précédente dans la surface plane (7, 8) de la bride, de sorte qu'une zone (16, 20) d'épaisseur réduite entre les deux rainures assure l'élasticité de la lèvre (11, 12), caractérisé en ce que cette lèvre (11) a une zone bombée en regard de l'autre bride (5) et forme par son sommet (10) en contact avec l'autre bride une ligne d'étanchéité lorsque les brides sont assemblées.

2. Système selon la revendication 1, caractérisé en ce que le fond d'au moins une des rainures (13, 14; 17, 18) a une section semi-circulaire.

3. Système selon l'une des revendications précédentes, caractérisé en ce que chacune des brides est munie d'une lèvre annulaire élastique (11, 12) formée chacune entre deux rainures (13, 14; 17, 18) ménagées dans la bride respective.

4. Système selon la revendication 3, caractérisé en ce que la distance entre l'axe (3) des brides et la rainure (14) ménagée dans la surface plane (7) de la bride (4), dont la lèvre (11) est bombée, est inférieure à la même distance dans l'autre bride (5), et que la distance entre le plan de contact (6) et la rainure (13), ménagée dans la surface cylindrique (15) de la bride (4) dont la lèvre est bombée, est supérieure à la distance entre le plan de contact et la rainure (17), ménagée dans la surface cylindrique, dans l'autre bride.

## Patentansprüche

1. System zur Abdichtung der Verbindung zwischen zwei Metallflanschen (4, 5) von Rohren (1, 2), die extremen Temperaturen ausgesetzt sind, wobei das System mindestens eine elastische ringförmige Lippe (11, 12) aufweist, die sich an einem der Flansche befindet und die integraler Bestandteil eines der Flansche (4, 5) ist sowie durch Drehbearbeitung von zwei Nuten (13, 14; 17, 18) erzeugt wird, von denen eine (13, 17) radial in die Zylinderoberfläche (15, 19) des Flansches eindringt, während die andere Nut (14, 18) senkrecht zur vorgenannten in die ebene Oberfläche (7, 8) des Flansches eindringt, derart, daß eine Zone (16, 20) verringerter Dicke zwischen den beiden Nuten die Elastizität der Lippe (11, 12) bewirkt, dadurch gekennzeichnet, daß diese Lippe (11) eine zum anderen Flansch (5) hinweisende gewölbte Zone aufweist und mit ihrer in Kontakt mit dem anderen Flansch stehenden Kuppe (10) eine Abdichtlinie bildet, wenn die Flansche miteinander verbunden sind.

2. System nach Anspruch 1, dadurch gekennzeichnet, daß der Boden mindestens einer der Nuten (13, 14; 17, 18) einen halbkreisförmigen Querschnitt aufweist.

3. System nach einem der vorhergehenden Ansprüche, dadurch gekennzeichnet, daß jeder der Flansche mit einer elastischen ringförmigen Lippe (11, 12) ausgestattet ist, die je zwischen zwei in den jeweiligen Flansch eingearbeiteten Nuten (13, 14; 17, 18) gebildet ist.

4. System nach Anspruch 3, dadurch gekennzeichnet, daß der Abstand zwischen der Achse (3) der Flansche und der in die ebene Oberfläche (7) des Flansches (4), dessen Lippe (11) gewölbt ist, eingearbeiteten Nut (14) kleiner ist als der gleiche Abstand beim anderen Flansch (5), und daß der Abstand zwischen der Berührungsebene (6) und der in die Zylinderoberfläche (15) des Flansches (4), dessen Lippe gewölbt ist, eingearbeitete Nut (13) größer ist als der Abstand zwischen der Berührungsebene und der in die Zylinderfläche eingearbeiteten Nut (17) im anderen Flansch.

## Claims

1. A sealing system adapted to tighten the connection between two metal flanges (4, 5) of tubes (1, 2) exposed to extreme temperatures, the system comprising at least one elastic annular lip (11, 12) on one of the flanges which constitutes an integral part of one of the flanges (4, 5) and which is obtained by cutting two grooves (13, 14; 17, 18) on a lathe machine, one penetrating radially into the cylindrical surface (15, 19) of the flange, and the other (14, 18) penetrating perpendicularly with respect to said groove into the plane surface (7, 8) of the flange, such that a zone (16, 20) of reduced thickness obtained between the two grooves ensures the elasticity of the lip (11, 12), characterized in that this lip (11) presents a domed zone opposite the other flange (5) and forms via its top end (10) in contact with the other flange a sealing line when the flanges are assembled to each other.

2. A system according to claim 1, characterized in that the bottom of at least one of the grooves (13, 14; 17, 18) has a semi-circular cross-section.

3. A system according to any one of the preceding claims, characterized in that each of the flanges is provided with an elastic annular lip (11, 12), each being formed between two grooves (13, 14; 17, 18) provided in the respective flange.

4. A system according to claim 3, characterized in that the distance between the axis (3) of the flanges and the groove (14) provided in the plane surface (7) of the flange (4), whose lip (11) is domed, is smaller than the same distance occuring in the other flange (5), and that the distance between the contact plane (6) and the flange (4) provided in the cylindrical surface (15) of the flange (4), whose lip is domed, is greater than the distance between the contact plate and the groove (17) provided in the cylindrical surface of the other flange.